**Europäisches Patentamt**

**(19) European Patent Office**

**Office européen des brevets**

(11) Publication number : **0 331 226 B1**

(12) **EUROPEAN PATENT SPECIFICATION**

(45) Date of publication of patent specification : **12.08.92 Bulletin 92/33**

(51) Int. Cl.⁵ : **B65G 23/06**

(21) Application number : **89200361.7**

(22) Date of filing : **15.02.89**

(54) **Combination of a drive device and a flexible conveying element.**

(30) Priority : **04.03.88 IT 1964688**

(43) Date of publication of application :
**06.09.89 Bulletin 89/36**

(45) Publication of the grant of the patent :
**12.08.92 Bulletin 92/33**

(84) Designated Contracting States :
**BE CH DE ES FR GB GR LI**

(56) References cited :
**DE-A- 2 556 171**
**DE-B- 1 752 481**
**US-A- 3 938 721**

(73) Proprietor : **SAVIO S.p.A.**
**Via Udine 105**
**I-33170 Pordenone (IT)**

(72) Inventor : **Sartoni, Sandro**
**via Pendini 1 A**
**I-40026 Imola Bologna (IT)**
Inventor : **Fontana, Mario**
**Largo Mazzini 25**
**I-15061 Arquato Scrivia Alessandria (IT)**
Inventor : **Ferrando, Rino**
**Via Donaver 33/7**
**I-16143 Genova (IT)**

(74) Representative : **De Carli, Erberto et al**
**ING. BARZANO' & ZANARDO MILANO S.p.A.**
**Via Borgonuovo, 10**
**I-20121 Milano (IT)**

EP 0 331 226 B1

**Description**

This invention relates to the combination of a drive device and a flexible conveying element which connect one or more feed zones to one or more zones provided with collection systems. Said endless conveying element normally extends along considerable distances for operationally linking several working units along an operating face of a single machine or for operationally linking the operating faces of two or more machines in strict relationship within the production process underway. Belt conveyor systems of this type extend for example along the working faces of very long textile machines to convey the tubes filled with wound yarn or empty of wound yarn to or from the production machines. In this respect these latter are automatically conveyed in spinning units of a ring spinning machine by drive members associated with gripper members.

It should be noted that the gripper members, the motorisation members and the control members for intermittent or continuous travel do not form part of the present invention and can therefore be of any constructional type suitable for their function, and will therefore not be described hereinafter.

The main object of the present invention is to provide a drive and guide device for belt conveying elements, preferably endless belts of considerable length, which provides reliable drive without minimum slippage under all operating conditions so that the tubes or other objects can be automatically handled without obstacle. A further object is to provide a drive and guide device which is of simple construction and small size to allow easy installation along any working face of a production machine or along the line linking two or more loading and unloading zones for the objects handled. A further object of the present invention is to provide a drive and guide device which is not influenced in its conveying accuracy by the presence of dust or volatile dusty material, which are often found in considerable quantity in production departments.

The drive and guide device of the present invention is used in particular in operational relationship with gripping devices which withdraw objects from the flexible conveying element on which they are present in ordered arrangement on pegs or the like, and with devices which deposit the objects onto said flexible conveying element in ordered spaced-apart arrangement. For the withdrawal and deposition operations to take place without difficulty it is necessary for all the object-holding elements to assume a precise position during said operations performed by the relative gripper members, which must deposit and withdraw the objects with maximum reliability.

By way of example, ring spinning machines comprise many hundreds of spindles along a single working face. When the tubes have been filled with wound yarn they are withdrawn from the relative spindles by a corresponding number of gripper members and deposited by them on the flexible conveying element, these being replaced in the spindles by empty tubes which are also carried by and housed on the same flexible conveying element. For the tube withdrawal and replacement operation to proceed without difficulty it is necessary that all the elements fixed on the flexible conveying element for the purpose of holding the empty tubes or tubes filled with wound yarn assume positions which are defined exactly by the predetermined gripper member withdrawal and deposition locations. A particular object of the invention is to provide a drive device for the flexible conveying element which is able to reliably ensure the precise positioning of the conveyed objects for any operating condition and for considerable conveying lengths even after prolonged operating periods.

Drive devices for flexible conveying elements of the known art generally operate on the friction drive principle. Devices of this construction are nearly always subject to more or less accentuated slippage. The limitation on the acceptable value of this latter requires considerable tensioning to be imposed on installing the flexible conveying element in order to increase its contact pressure on the drive pulley to increase the coefficient of friction along the arc of contact between said drive pulley and the contacting portion of the inner surface of the flexible element. This latter is susceptible to longitudinal elastic deformation which increases as the installed tension increases, to therefore give rise to increasing linear non-uniformity of the distances by which the elements holding the conveyed objects are spaced apart. All this comprises the operation of the entire conveying device at the moment in which said gripper members act.

In addition said known conveying devices with friction drive have further drawbacks in that many lateral guide elements are required to prevent non-centered operation, which would result in lateral slippage of the flexible belt and in the limit its separation from the drive and reversal pulleys or drums. This latter results in blockage of the handling system. Moreover, the whole assembly is constructionally complicated and costly. In addition, said lateral guides act on the longitudinal edges of the flexible element with a grazing friction action which tends to damage the flexible element and substantially reduce its working life.

Other devices proposed in the art use flexible elements with inner toothing or similar projections, which engage toothed drive and reversing wheels to allow the drive to take place by engagement between toothed projections in accordance with the geometry of the conjugate profiles. However even in these applications the installed tension, wear and thermal variations cause the distance between the teeth or projections on the flexible element to vary and become non-uniform so that they no longer correctly engage the toothing of the drive and reversal wheels, with resultant more or less accentuated jumping leading to operative non-concordance with the feed and withdrawal means, so blocking the entire handling system.

Again, the repeated jumping often results in tearing, fibrillation and rapid wear of the flexible element, which when damaged causes interruption of the production process and thus reduces the economy and productivity of the entire production plant.

In the aforesaid proposals of the known art it is necessary to use relatively large pulley or toothed wheel diameters so that the transverse bulk is fairly large along the entire working face, resulting in a construction which is hardly compact.

The object of the present invention is to obviate the aforesaid drawbacks by providing a drive device for an object-conveying flexible element having the following advantages:

– it enables very high peripheral drive forces to be transmitted even for low installed tension;

– it enables flexible elements to be driven which extend along long horizontal distances or inclined at any angle, by providing high-efficiency motion transmission resulting in advancement without even minimum longitudinal slippage or minimum lateral sliding, with perfect guiding along the entire movement path;

– it enables the flexible element to be driven without the use of lever mechanisms or tensioning arms, and without the use of mechanical members such as guides or lateral rails;

– it allows the use of flexible element such as belts or the like of normal construction and therefore without the need for surface layers covered with special high-adhesion materials with consequent high construction cost;

– it allows operation in dusty and wet environments in contact with oil or grease or other soiling liquids often present in production departments, the driving operation not being in any way influenced by said substances and there being no need for frequent cleaning of the flexible element or circular rims of the about which it passes;

– it is not influenced by the effects of sudden angular starting acceleration, braking or repeated speed variations in the flexible element during the operations which take place during the conveying;

– the pulleys about which the flexible element passes can be of small diameter if the installation requirements are such that overall dimensions must be highly contained along the entire longitudinal extension.

These and further advantages are attained according to the present invention by a combination of drive device and a flexible conveying element comprising:

– a drive cup provided with frontal toothing and rigidly joined to and aligned with a drive shaft having its axis inclined to the rotating axis of two idle pulleys which face the one and other side of the drive cup to rotate by induced entrainment about said rotating axis;

– a plurality of pins fixed to the inner surface of the flexible conveying element and spaced apart from each other by the pitch of the front teeth of the drive cup, the spaces of which, by means of their active flank, engage said pins one at a time to determine the active drive action by compelling the flexible element to advance and wind about the idle pulleys.

In its practical implementation, the drive device for the flexible conveying element, according to the present invention, is characterised in that the axis of the drive shaft and the axis of the rotating shaft carrying the idle pulleys lie in a plane parallel or substantially parallel to those surfaces of the upper branch and lower branch of said flexible element which are in proximity to its rotating portion, said plane being the symmetrical plane of the active drive arc this latter substantially coinciding with the pitch of the front teeth of the drive cup and consequently with the pitch of the pins projecting from the inner surface of the flexible conveying element.

In the practical implementation of the present invention the drive device for flexible conveying elements is further characterised in that the angle by which the drive shaft axis is inclined to the rotating axis must be less than the limiting value at which the active drive arc and the arc through which the pin is contained within the space corresponding to the drive tooth are superposed and coincide to the same length.

In the practical implementation of the present invention the drive device for flexible conveying elements is further characterised in that the axial position of the drive cup relative to the idle winding pulley facing the teeth must be such that the distance between the tip of the teeth and the frontal rim of said pulley must, along the entire active drive arc, be substantially less than the transverse dimension, perpendicular to the travel direction, of the guide and drive pins of the flexible conveying element.

In the practical implementation of the present invention, according to one embodiment thereof the drive device for the flexible element comprises two drive cups, one facing the other, both comprising toothing with frontally aligned teeth of similar shape, to simultaneously embrace the individual drive and guide pins of the flexible conveying element.

In the practical implementation of the device of the present invention, the two said drive cups are driven with the same rotational speed with synchronized rotational motion, each of the two being aligned with and joined to its own drive shaft, which has its axis inclined to the winding axis. In addition, the axes of the two drive shafts of the two drive cups lie substantially in the same plane in which the drive shaft axis lies when only one drive cup is present, as heretofore stated, and the inclination of each of the two drive shaft axes to the winding axis is substantially one half the inclination of the single drive shaft to the same winding axis when the device comprises only one drive cup.

In the practical implementation of the present invention, according to a further embodiment thereof the frontal spaces of the drive teeth of the drive device for the flexible element are of substantially trapezoidal shape. In the practical implementation of the present invention, according to a further embodiment thereof the frontal spaces of the drive teeth of the drive device for the flexible element are of circular or substantially oval shape.

The invention is described in detail hereinafter with reference to the embodiments shown diagrammatically on the accompanying drawings, together with clarification of further particulars and characteristics, it being understood that any modifications in the relative positions of the elements and consequent simplifications deriving therefrom fall within the range of protection requested by virtue of representing constructional modifications included within the general idea.

On the accompanying drawings:

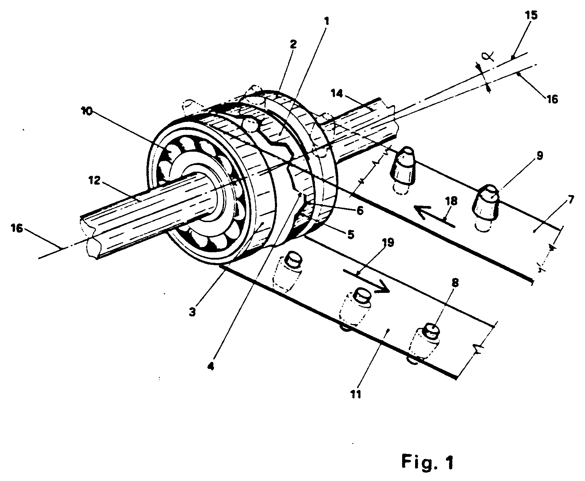

Figure 1 is a perspective isometric view of the device of the present invention showing the configuration comprising a single drive cup in the condition in which this latter, with its front teeth, is driving the flexible element by the progressive engagement of one pin at a time in the corresponding space of one of said front teeth;

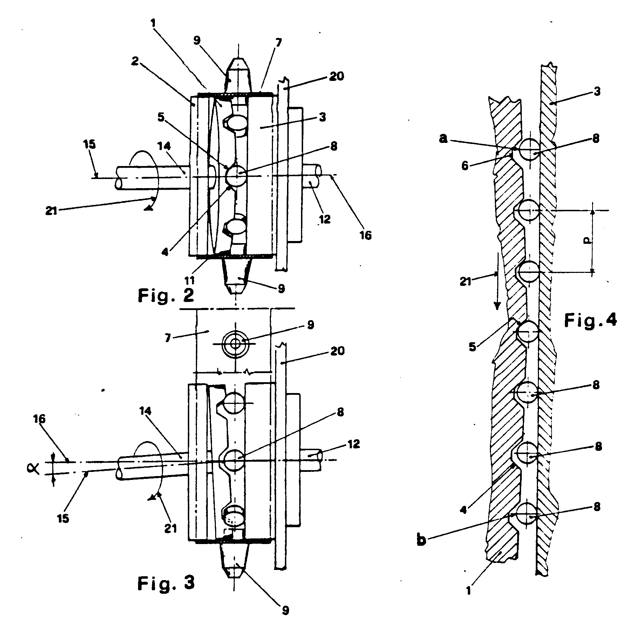

Figure 2 is a diagrammatic partially sectioned front view of the device of the present invention showing the single drive cup facing the sides of the two idle pulleys in the condition in which the spaces of its front teeth laterally and progressively envelop the drive pins to engage them and urge them one at a time along the drive path, after which said spaces withdraw laterally for their progressive separation from the respective pins;

Figure 3 is a diagrammatic partly sectional plan view of Figure 2;

Figure 4 is a diagrammatic view showing the straight-line transformation of the actual curved path into a convenient theoretical linear path to show a first initial portion of progressive lateral reception of the flexible element drive pins by the corresponding spaces of the front teeth of the single drive cup, a second central portion adjacent to the first and characterised by proper drive engagement, and a final portion adjacent to the central portion characterised by progressive lateral withdrawal of the spaces from the previously received and gripped pins;

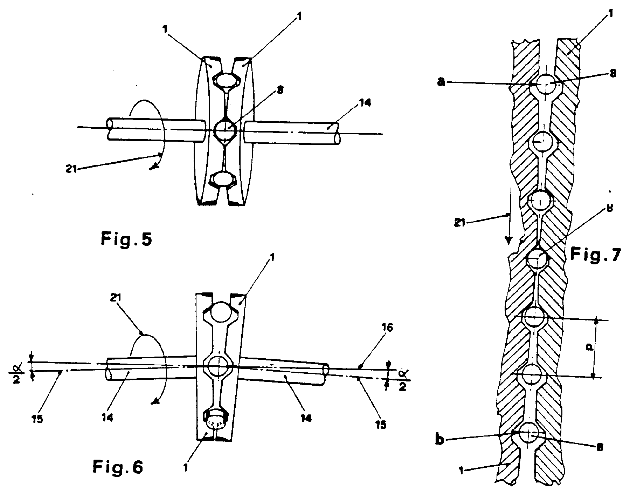

Figure 5 is a diagrammatic frontal view of the present invention showing the configuration of two drive cups, one in front of the other, both provided with toothing in the form of frontally aligned teeth of similar shape, during the condition in which the spaces of their teeth laterally and progressively receive the drive pins to engage them and urge them one at a time along the drive portion, after which said spaces follow a lateral withdrawal path for their progressive separation from the respective pins;

Figure 6 is a diagrammatic plan view of Figure 5;

Figure 7 is a diagrammatic representation of the straight-line transformation of the actual curved path into a convenient theoretical linear path to show a first initial portion of progressive lateral reception of the flexible element drive pins by the frontally aligned spaces of the two drive cups, a second central portion adjacent to the first and characterised by proper drive engagement, and a final portion adjacent to the central portion characterised by progressive lateral separation of the spaces from the previously received and gripped pins.

In the figures, identical elements carry equal reference numerals. Furthermore in the figures for reasons of overall clarity those parts not necessary for the understanding of the invention, such as the motorisation centres, the various support structures and the feed and withdrawal means are omitted. In said figures: 1 is the drive cup provided with front toothing and rigidly integral with the drive shaft 14; 2 is the idle pulley facing the rear of the drive cup 1 and rotating on a bearing 10 by entrainment of the flexible conveying element 7, which to reverse its direction of travel winds about its outer periphery; 3 is the idle pulley which frontally faces the teeth of the drive cup 1 to provide by means of its frontal rim an axial abutment and guide action on the drive pins 8 while it rotates on a bearing 10 by entrainment by the flexible conveying element 7, which to reverse its direction of travel winds about its outer periphery; 4 and 5 are the flanks of the front teeth of the drive cup [1] of which one of the two is active in driving the pin 8 depending on the travel direction of the flexible conveying element. Said flanks can comprise a rectilinear portion or a curved portion, or be of mixed shaped conveniently chosen on the basis of the dimensions and geometrical form of the drive pin 8 and likewise of the components of the drive force, which derives from the thrust of the pin on the active flank of the tooth of the drive cup 1; 6 is the root of the drive tooth space; 7 is the taut carrying branch of the flexible conveying element of belt form; 8 are the drive pins fixed to the inner surface of the flexible conveying element and arranged spaced apart from each other with the same pitch as the front teeth of the drive cup 1. The series of consecutive pitches "p" (see Figures 7 and 4) of the drive pins 8 along the entire length of the flexible element can on account of constructional inaccuracies or of more or less elastic deformation can lie within fairly wide allowable tolerances without in any way compromising the drive in that the device of the present invention involves a special motion transmission configuration which largely compensates for such geometrical inaccuracies.

As will be apparent to an expert of the art, all this allows considerable constructional simplifications and corresponding economy; 9 are the pegs which hold the objects conveyed from one or more feed zones to one or more withdrawal zones. Said pegs or like elements, fixed suitably on the outer surface of the flexible conveying element, can be spaced apart by the same pitch as the drive pins 8 or can be of different pitch to correspond to the feed means and withdrawal means; 11 is the return branch of the flexible conveying element of belt form; 12 is the shaft about which the pulleys 2 and 3 rotate; 14 is the drive shaft rigidly joined to and aligned with the drive cup 1; 15 is the axis of the drive shaft 14 and of the drive cup 1. Said axis lies in a plane parallel or substantially parallel to the surfaces of the portions which lie in immediate proximity to the winding reversing portion of the upper branch 7 and lower branch 11 of the flexible conveying element of the belt form; 16 is the axis of the shaft 12. Said axis lies in the same plane as the axis 15 of the drive shaft 14; α is the angle at which the drive axis 15 is inclined to the winding axis 16.

Said inclination α cannot be equal to or less than a minimum limiting value for which entry interference begins between the drive pins 8 and the front teeth of the drive cup 1 during their progressive lateral engagement.

Furthermore, said inclination α cannot be equal to or greater than a maximum limiting value for which the active drive arc and the arc through which the pin is contained within the space corresponding to the drive tooth are superposed and coincide to the same length.

In this respect, the active drive arc has a straightened length substantially equal to the pitch "p" of the drive pins 8 and is located straddling and substantially symmetrical about the plane in which the said axes 15 and 16 lie. The arc through which the drive pin 8 is contained within the corresponding space in which the drive engagement occurs extends from the commencement of lateral winding of the pin within the space and then through the drive arc and during the progressive withdrawal of the space from the pin to terminate when the pin 8 has totally emerged from said space. The positions indicated by the letters a and b of Figure 4 and Figure 7 approximately represent the ends of the straightened containing arc. Said containing arc is also substantially symmetrical about the plane in which the said axes 15 and 16 lie; 18 is the arrow indicating the direction of travel of the taut carrying branch 7 of the flexible conveying element of belt form; 19 is the arrow indicating the direction of travel of the return branch of the flexible conveying element of belt form; 20 is a flat element for supporting the device of the invention on the support frame; 21 is the arrow indicating the direction of rotation of the drive shaft 14 and consequently of the rigidly connected drive cup 1 for the travel directions 18 and 19 of the branches of the flexible conveying element of belt form. The operation of the drive device in driving and advancing a flexible conveying element of belt form shown on the accompanying drawings is apparent. To advance the belt element the motor source is activated to rotate the drive shaft 14, which by virtue of its rigid integral connection rotates the drive cup 1 provided with front toothing. The spaces of said toothing gradually engage the plurality of pins 8 fixed to the inner surface of the flexible belt element. Said spaces grip and pincer said pins one at a time and with one of their flanks produce the active drive action to compel the belt element to advance and wind about the pulleys 2 and 3. This is attained without any longitudinal slippage in the direction of advancement and without any lateral sliding. In this respect, the device of the present invention performs a double operating function, in that it drives by the thrust action of one flank of a front tooth against a pin 8 while at the same time providing lateral guiding by the progressive engagement by lateral envelopment between the spaces of the front teeth and the thrust pins 8, which are pincered one at a time along the drive arc.

When any pin 8 enters the thrust arc the preceding pin leaves said thrust arc substantially at the same instant. The presence of a single drive cup generates along the drive arc an axial force perpendicular to the true drive force. In this embodiment it is thus necessary to use a bearing able to withstand axial loads.

The use of two drive cups, one facing the other and both provided with toothing the teeth of which are of similar shape and are frontally aligned, allows the pin 8 to be embraced without generating along the drive arc any axial force perpendicular to the drive force, the use of a bearing able to withstand axial loads therefore not being necessary in this embodiment.

The one or two drive cups are provided with front toothing only by way of example, as radial toothing or similar projections able to gradually engage the drive pins can be alternatively provided. In addition various modifications can be made to the drive pins and conveyor belt in terms of shape, dimensions and their manner of fixing.

**Claims**

1. The combination of a drive device and a flexible conveying element (7), comprising:
 – a drive cup (1) provided with frontal toothing (4, 5, 6) and rigidly aligned with and joined to a drive shaft (14) having its axis (15) inclined to the rotating axis (16); of two idle pulleys (2, 3) which face the one and other side of the drive cup to rotate by induced entrainment about said rotating axis;
 – a plurality of pins (8) fixed to the inner surface of the flexible conveying element and spaced apart from each other by the pitch (p) of the front teeth of the drive cup, the spaces of which, by means of their active flank, engage said pins one at a time to determine the active drive action by compelling the flexible element to advance and wind about the idle pulleys.

2. A drive device as claimed in claim 1, characterised in that the axis (15) of the drive shaft (14) and the rotating axis (16) lie in a plane parallel or substantially parallel to those surfaces of the upper branch and lower branch of said flexible coveying element which are in proximity to its winding portion, said plane being the symmetrical plane of the active drive arc, this latter substantially coinciding with the pitch of the front teeth of the drive cup and consequently with the pitch of the pins projecting from the inner surface of the flexible conveying element.

3. A drive device as claimed in claims 1 and 2, characterised in that the angle ($\alpha$) by which said drive shaft axis is inclined to said rotating axis must be less than the limiting value for which the active drive arc and the arc through which the pin is contained within the space corresponding to the drive tooth are superposed and coincide to the same length.

4. A drive device as claimed in claims 1 to 3, characterised in that the axial position of the drive cup (1) relative to the idle winding pulley (3) facing the teeth must be such that the distance between the tip of the teeth and the frontal rim of said pulley must, along the entire active drive arc, be substantially less than the transverse dimension, perpendicular to the travel direction, of the guide and drive pins of the flexible conveying element.

5. A drive device as claimed in any ones of claims 1 to 4, characterised by comprising two drive cups, one facing the other, both comprising toothing with frontally aligned teeth of similar shape, to simultaneously embrace the individual drive and guide pins of the flexible conveying element.

6. A drive device as claimed in claim 5, characterised in that the two drive cups are driven with the same rotational speed with synchronized rotational motion.

7. A drive device as claimed in claims 5 and 6, characterised in that each of the two drive cups is aligned with and joined to its own drive shaft, which has its axis inclined to the winding axis.

8. A drive device as claimed in claims 5 and 7, characterised in that the axes of the two drive shafts of the two drive cups lie substantially in the plane in which the drive shaft axis lies when only one drive cup is present, the inclination of each of the two drive shaft axes to the winding axis being susbtantially one half the inclination of the single drive shaft to the same winding axis when the device comprises only one drive cup.

9. A drive device as claimed in any one of claims 1 to 8, characterised in that the spaces of the drive teeth are of substantially trapezoidal shape.

10. A drive device as claimed in claim 1 and in any one of the subsequent claims, characterised in that the spaces of the drive teeth are of circular or oval or similar shape.

**Patentansprüche**

1. Kombination aus einer Antriebsvorrichtung und einem flexiblen Förderelement (7), umfassend:
 – eine Antriebsschale (1), die mit einer Stirnzahnung (4, 5, 6) versehen und mit einer Antriebswelle (14) starr ausgerichtet und verbunden ist, deren Achse (15) zur Drehachse (16) zweier mitlaufender Scheiben (2, 3) geneigt ist, welche der einen und der anderen Seite der Antriebsschale zugekehrt sind, um durch induzierte Mitnahme um diese Drehachse zu rotieren;
 – eine Vielzahl von Zapfen (8), die an der Innenfläche des flexiblen Förderelementes befestigt sind und in einem gegenseitigen Abstand entsprechend der Teilung (p) der Stirnzähne der Antriebsschale angeordnet sind, deren Zahnlücken mit ihrer aktiven Flanke an den Zapfen nacheinander angreifen, um eine aktive Antriebswirkung zu erzielen, indem das flexible Element zum Vorschub und zum Umschlingen der mitlaufenden Scheiben gezwungen wird.

2. Antriebsvorrichtung nach Anspruch 1, dadurch gekennzeichnet, daß die Achse (15) der Antriebswelle (14) und die Drehachse (16) in einer Ebene liegen, die parallel oder im wesentlichen parallel zu jenen Flächen des oberen und des unteren Trums des flexiblen Förderelementes ist, welche nahe dessen Umschlingungsteil liegen, wobei die Ebene die Symmetrieebene des aktiven Antriebsbogens ist, der im wesentlichen mit der Teilung der Stirnzähne der Antriebsschale zusammenfällt und folglich mit der Teilung der Zapfen, die von der Innenseite des flexiblen Förderelementes abstehen.

3. Antriebsvorrichtung nach den Ansprüchen 1 und 2, dadurch gekennzeichnet, daß der Winkel ($\alpha$), um welchen die Antriebswellenachse zur Drehachse geneigt ist, kleiner sein muß als der Grenzwert, für welchen der aktive Antriebsbogen und der Bogen, über welchen der Zapfen in der dem Antriebszahn entsprechenden Lücke enthalten ist, übereinander liegen und auf der gleichen Länge zusammenfallen.

4. Antriebsvorrichtung nach einem der Ansprüche 1 bis 3, dadurch gekennzeichnet, daß die Axialstellung der Antriebsschale (1) relativ zu den mitlaufenden Umlenkscheiben (3), welche den Zähnen zugekehrt sind, derart sein muß, daß der Abstand zwischen dem Scheitel der Zähne und dem Vorderrand der Scheiben über den gesamten aktiven Antriebsbogen wesentlich kleiner ist als die Querabmessung der Führung und der Antriebszapfen des flexiblen Förderelementes senkrecht zur Bewegungsrichtung.

5. Antriebsvorrichtung nach einem der Ansprüche 1 bis 4, dadurch gekennzeichnet, daß sie zwei Antriebsschalen aufweist, die einander zugekehrt sind und beide eine Zahnung mit Stirnzähnen ähnlicher Gestalt aufweisen, um gleichzeitig die einzelnen Antriebs- und Führungszapfen des flexiblen Förderelemetes zu umfassen.

6. Antriebsvorrichtung nach Anspruch 5, dadurch gekennzeichnet, daß die beiden Antriebsschalen mit der gleichen Drehgeschwindigkeit mit synchronisierter Drehbewegung angetrieben werden.

7. Antriebsvorrichtung nach den Ansprüchen 5 und 6, dadurch gekennzeichnet, daß jede der beiden Antriebsschalen mit ihrer eigenen Antriebswelle ausgerichtet und verbunden ist, deren Achse zur Umschlingungsachse geneigt ist.

8. Antriebsvorrichtung nach den Ansprüchen 5 und 7, dadurch gekennzeichnet, daß die Achsen der beiden Antriebswellen der beiden Antriebsschalen im wesentlichen in jener Ebene liegen, in welcher die Antriebswellenachse liegt, wenn nur eine Antriebsschale vorhanden ist, wobei die Neigung jeder der beiden Antriebswellenachsen zur Umschlingungsachse im wesentlichen die Hälfte der Neigung der einzigen Antriebswelle zu der gleichen Umschlingungsachse ist, wenn die Vorrichtung nur eine Antriebsschale aufweist.

9. Antriebsvorrichtung nach einem der Ansprüche 1 bis 8, dadurch gekennzeichnet, daß die Zahnlücken der Antriebszähne im wesentlichen trapezförmig sind.

10. Antriebsvorrichtung nach Anspruch 1 und einem der nachfolgenden Ansprüche, dadurch gekennzeichnet, daß die Lücken der Antriebszähne kreisförmig oder oval oder von ähnlicher Gestalt sind.

## Revendications

1. Combinaison d'un dispositif d'entraînement et d'un élément transporteur souple (7) comprenant :
   – une cuvette d'entraînement (1) pourvue d'une denture frontale (4, 5, 6) et alignée de façon rigide avec un arbre d'entraînement (14) et accouplée à cet arbre dont l'axe (15) est incliné par rapport à l'axe de rotation (16) de deux poulies folles (2, 3) qui se trouvent en face de l'un et de l'autre côté de la cuvette d'entraînement pour être entraînées en rotation par entraînement induit autour dudit axe de rotation;
   – une pluralité de picots (8) fixés à la surface intérieure de l'élément transporteur souple et espacés les uns des autres du pas (P) des dents frontales de la cuvette d'entraînement, dont les espaces, au moyen de leur flanc actif, attaquent les picots un par un pour déterminer l'action d'entraînement actif en obligeant l'élément souple à avancer et à s'enrouler autour des poulies folles.

2. Dispositif d'entraînement selon la revendication 1, caractérisé en ce que l'axe (15) de l'arbre d'entraînement (14) et l'axe de rotation (16) se trouvent dans un plan parallèle ou sensiblement parallèle aux surfaces du brin supérieur et du brin inférieur de l'élément transporteur souple qui se trouvent à proximité de sa partie d'enroulement, ledit plan étant le plan de symétrie de l'arc d'entraînement actif, ce dernier coïncidant sensiblement avec le pas des dents frontales de la cuvette d'entraînement et, par conséquent, avec le pas des picots faisant saillie de la surface intérieure de l'élément de transporteur souple.

3. Dispositif d'entraînement selon les revendications 1 et 2, caractérisé en ce que l'angle ($\alpha$) dont l'axe de l'arbre d'entraînement est incliné par rapport à l'axe de rotation doit être inférieur à la valeur limite pour laquelle l'arc d'entraînement actif et l'arc qui décrit le picot pendant qu'il est contenu à l'intérieur de l'espace correspondant à la dent d'entraînement sont superposés et coïncident sur la même longueur.

4. Dispositif d'entraînement selon les revendications 1 à 3, caractérisé en ce que la position axiale de la cuvette d'entraînement (1) par rapport à la poulie d'enroulement folle (3) faisant face aux dents doit être telle que la distance entre l'extrémité des dents et le bord frontal de cette poulie doit, le long de l'arc d'entraînement actif complet, être sensiblement inférieure à la dimension transversale, perpendiculaire à la direction de déplacement, du guide et des picots d'entraînement de l'élément transporteur souple.

5. Dispositif d'entraînement selon l'une quelconque des revendications 1 à 4, caractérisé en ce qu'il comprend deux cuvettes d'entraînement, l'une se trouvant en regard de l'autre, les deux cuvettes comprenant des dentures pourvues de dents alignées frontalement et de forme similaire, de manière à entourer simultanément les picots d'entraînement et de guidage individuels de l'élément transporteur souple.

6. Dispositif d'entraînement selon la revendication 5, caractérisé en ce que les deux cuvettes d'entraînement sont entraînées à la même vitesse de rotation avec un mouvement de rotation synchronisé.

7. Dispositif d'entraînement selon les revendications 5 et 6, caractérisé en ce que chacune des deux cuvettes d'entraînement est alignée avec son propre arbre d'entraînement et est reliée à cet arbre dont l'axe est incliné par rapport à l'axe d'enroulement.

8. Dispositif d'entraînement selon les revendications 5 et 7, caractérisé en ce que les axes des deux arbres d'entraînement des deux cuvettes d'entraînement se trouvent sensiblement dams le plan dams lequel l'axe de l'arbre d'entraînement se trouve lorsqu'une seule des cuvettes d'entraînement est présente, l'inclinaison de chacun des deux axes d'arbres d'entraînement par rapport à l'axe d'enroulement étant sensiblement égale à la moitié de l'inclinaison du seul arbre d'entraînement par rapport au même axe d'enroulement lorsque le dispositif ne comprend qu'une seule cuvette d'entraînement.

9. Dispositif d'entraînement selon l'une quelconque des revendication 1 à 8, caractérisé en ce que les espaces entre les dents d'entraînement ont une forme sensiblement trapézoïdale.

10. Dispositif d'entraînement selon la revendication 1 et selon l'une quelconque des revendications suivantes, caractérisé en ce que les espaces des dents d'entraînement ont une forme circulaire ou ovale ou toute autre forme similaire.

Fig. 1

Fig. 2

Fig. 3

Fig. 4

Fig. 5

Fig. 6

Fig. 7